# EUROPÄISCHE PATENTSCHRIFT

(11) **EP 0 702 110 B1**
(45) Veröffentlichungstag und Bekanntmachung des Hinweises auf die Patenterteilung: **06.08.1997**
(21) Anmeldenummer: 95114661.2
(22) Anmeldetag: 18.09.1995
(51) Int. Cl.: E02D 31/00, C09K 17/02, C09K 17/12

(54) **Verfahren zur Abdichtung von Bodenformationen**
Process for sealing soil formations
Procédé pour étancher des couches de sol

(30) Priorität: 16.09.1994 DE 4433079
(43) Veröffentlichungstag der Anmeldung: 20.03.1996
(73) Patentinhaber: Kügler, Jost-Ulrich, D-45219 Essen (DE)
(72) Erfinder: Kügler, Jost-Ulrich, D-45219 Essen (DE)
(74) Vertreter: Dost, Wolfgang, Dr.rer.nat., Dipl.-Chem.

(56) Entgegenhaltungen:
- EP-A- 0 125 680
- EP-A- 0 404 999
- WO-A-89/01547

## Beschreibung

Bei der Herstellung mineralischer Abdichtungsschichten für Basis- und Oberflächenabdichtungen von Deponien und Altlasten kommt es durch Niederschläge zu erheblichen Bauschwierigkeiten beim Einbau des Abdichtungsmaterials, da dieses bei erhöhtem Wassergehalt und durch die zusätzliche Wasseraufnahme bei Niederschlägen beim Verdichten stark aufweicht und somit nicht mehr bearbeitungsfähig ist. Zu nasse Abdichtungsschichten müssen dann häufig wieder ausgebaut werden. Es mußten auch immer wieder notwendige Deponieabdichtungen wegen schlechter Witterungsverhältnisse eingestellt werden, was hohe Stillstandskosten verursacht.

Um die geforderten Abdichtungsqualitäten auch bei wechselnder Witterung zu erhalten, hat sich das Einrichten von Schutzzelten über den Bauabschnitten oder das wiederholte Abdecken der Herstellungsabschnitte mit Folien zur Niederschlagsabweisung als notwendige vorübergehende Schutzmaßnahme erwiesen.

Trotz dieser sehr kostenaufwendigen Schutzmaßnahmen kommt es weiterhin zu erheblichen Einbauschwierigkeiten, indem das Ausgangsmaterial (Ton, tonhaltiger Schluff) häufig bereits an der Entnahmestelle zu hohe Ausgangswassergehalte mitbringt und bei diesem Wassergehalt nicht verarbeitungs- und verdichtungsfähig ist. Üblicherweise werden seit langem Rücktrocknungsmaßnahmen im Erd-, Straßen- und Wasserbau durchgeführt. Als Rücktrocknungsmaterialien werden Brandkalk oder Zement bei der sog. Kalk- oder Zementstabilisierung verwendet. So ist es möglich, übernäßte bindige Bodenschichten durch Zugabe von 4 - 10 Gew.-% Zement oder Kalk in ihrem Wassergehalt durch Wasserbindung an den Zement oder Kalk so rückzutrocknen, daß diese Bodenschichten eine krümelige Struktur erhalten und wieder gut verdichtungsfähig sind. Ein derart aufbereiteter Boden ist aber bereits bei der Verarbeitung aufgrund seines spröden Verhaltens rißanfällig. Darüber hinaus geht infolge des hydraulischen Abbindes die Plastizität verloren. Die verdichteten abgebunden Böden sind halbfest bis fest. Wegen dieser Eigenschaften entfällt diese gängige Stabilisierungsmethode für den Einbau mineralischer Abdichtungsschichten. Hydraulische Zuschläge sind deshalb für Deponien nicht zugelassen.

Die Praxis hat gezeigt, daß bei erhöhten Wassergehalten von 1 bis 3 % über dem Wassergehalt der Proctorkurve im nassen Bereich dem bindigen Bodenmaterial trockene, aktive Tonmehle, wie z.B. Bentonit zugemischt werden können. Die Zugabemenge liegt dabei bei 2 bis 8 Gew.-%. Durch die Wasseraufnahmefähigkeit des aktiven Tonmehles wird das bindige Bodengemisch rückgetrocknet und ist dann verdichtungsfähig. Müssen aber übernäßte Böden eingesetzt werden, die aufgrund des Wassergehaltes und der Fließeigenschaften nach ATTERBERG (Versuch nach DIN 18.122) eine breiige Konsistenz besitzen, laßt sich dieses Verfahren für den Deponiebau und für den Erdbau nicht mehr ohne weiteres anwenden.
- Durch das **Fräsverfahren** ist eine ausreichende Homogenisierung des Materials nicht mehr gewährleistet und eine Vermischung im Zwangsmischer erforderlich.
- Durch das Einmischen großer Mengen Tonmineralien wird die Abdichtungsschicht äußerst witterungsempflindlich. Die geringsten Niederschlagsmengen bewirken aufgrund der hohen Wasseraufnahmefähigkeit des Tonmehls sofort eine starke Konsistenzveränderung. Ein zunächst walzfähiges Abdichtungsgemisch wird bereits bei geringen Niederschlagseinwirkungen nicht mehr verarbeitungsfähig und weicht tiefreichend auf, so daß der Einbau der nächsten Abdichtungslage mit Erdbaugeräten nicht mehr möglich ist, da diese Geräte in die weiche Schicht einbrechen.
- Die Abtrocknung bei trockener Witterung benötigt einen Zeitraum von mehreren Tagen. Zusätzlich entstehen bei derartigen Abtrocknungen Schrumpfrisse kurz nach dem Verdichten, so daß eine neue Bearbeitung der Schicht zumindest durch Fräsen und Verdichtung erforderlich ist.

Bei dem Verfahren der Rücktrocknung mit aktivem Tonmehl hat sich als negativ herausgestellt, daß die Rißanfälligkeit derartig vergüteter mineralischer Abdichtungsschichten durch das verstärkte Schrumpfverhalten bei Abtrocknung, insbesondere unter dem Abschirmungseffekt von Kunststoffdichtungsbahnen im Basis- und Oberflächenbereich, stark erhöht wird.

Als weitere Rücktrocknungsmethode ist bekannt, zu nasse ton- oder lehmhaltige Böden thermisch zu trocknen, so daß sie ihre Einbaufähigkeit wiedererlangen.

Auch das Einmischen von trockenen, feinen Zuschlagsstoffen, wie Basaltmehl und rückgetrockneter Sand, Kraftwerksaschen, Hochofenschlacken und Stäube, ist bekannt. Bei diesem Verfahren ist aber das Ausmaß der Rücktrocknung begrenzt, da durch die Oberflächenbenetzung derart trockener Zuschlagstoffe nur eine relativ geringe Menge Wasser gebunden werden kann. Die Zugabe größerer Mengen trockener Mehle und/oder Sande zur Erlangung der Verarbeitungsfähigkeit führt aber bei Einmischung in Tone oder Schluffe zu einer erheblichen Verschlechterung des Durchlässigkeitsbeiwertes und wurde auch bisher nichtpraktiziert.

Weiterhin ist aus der EP-B 0 338 039 bekannt, daß künstliche, feinkörnige Bodengemische, wie Klärschlamm, durch Zugabe von trockenen körnigen Zuschlagsstoffen, wie Verbrennungsaschen, Stäube oder getrocknete Recyclingsande, zu einem verdichtungsfähigen und abdichtenden Einbaugemisch aufbereitet werden können. Wie bereits oben beschrieben, dürfen derartige Zuschlagsstoffe jedoch nicht in beliebiger Menge zugegeben werden, da andernfalls die geforderten Abdichtungswerte nicht erreicht werden. Bei den verwendeten Klär- oder Gewässerschlämmen handelt es sich um mechanisch entwässerte sowie chemisch konditionierte Schlämme mit Wassergehalten von 70 % oder mehr.

Die Technischen Anleitungen, TA Abfall und TA Siedlungsabfall gehen davon aus, daß die mineralische Abdichtungskomponente einer Kombinationsdichtung, bestehend aus einer mineralischen 50 cm starken Dichtung aus tonhaltigen, bindigen Böden mit aufliegender Kunststoffdichtungsbahn, die wichtigste Abdichtungskomponente darstellt, die auf Dauer wirksam sein soll. Als Ausgangsmaterial für die mineralische Dichtungskomponente wird Ton hinsichtlich seiner Dichtigkeit, seinem Mineralgefüge und seiner Beständigkeit als qualitätsorientierendes Abdichtungsmaterial genannt.

Es hat sich aber herausgestellt, daß tonhaltige Dichtungen aufgrund ihres hohen Schrumpfverhaltens und der bei Deponien gegebenen mechanischen Beanspruchung, z.B. durch Setzungen, stark rißanfällig sind und hierdurch die Abdichtungsqualität auf Dauer infrage gestellt ist. Auch ist bekannt, daß mineralische Oberflächenabdichtungen bis in einige Meter Tiefe im Sommer ihren Wassergehalt um mehrere Prozent verringern, was ebenfalls zur Bildung von Schrumpfrissen führt.

Um diesem schädlichen Verhalten entgegenzuwirken wurde die aktive Rißsicherung nach EP-B-404 999 eingeführt. Hierbei handelt es sich um die Bewehrung des mineralischen Abdichtungssystems mit einem gering dehnfähigen, dünnen, gegen Deponiesickerwasser beständigen Gewebe zur Aufnahme von Zugspannungen und somit zur Minimierung und Verteilung von Rissen gegen Verformungen mit Überlagerung eines sog. Fließbodens, der in der Lage ist, bei auftretenden Rissen diese durch Feinstboden sofort wieder zuzusetzen, somit eine Aufweitung des Risses durch Erosion zu verhindern und damit die Abdichtungswirkung auf Dauer zu erhalten.

Weiterhin wurden Vorschläge dahingehend unterbreitet, eine Trockendichtung in spezieller Korngrößenverteilung unter Zumischung von trockenen Tontmineralien herzustellen, die erst dann eine abdichtende Wirkung übernehmen, wenn die Haltbarkeit einer Kunststoffdichtungsbahn nicht mehr gegeben ist. Durch Zutritt von Wasser soll dann das Dichtsystem wirksam werden. Im trockenen Zustand sind zwar Schrumpfrisse auszuschließen; da aber langfristig eine Durchfeuchtung des Erdreichs nicht ausgeschlossen werden kann, ist auch hier das materialspezifische Schrumpfverhalten wirksam.

Grundsätzlich wird jedoch in der TA Abfall und der TA Siedlungsabfall derzeitig eine Kombinationsdichtung im Basisbereich zur Abdichtung von Deponieoberflächen gefordert. Hierbei handelt es sich um eine mineralische Abdichtung aus feinstkörnigem bindigen Boden, der hinsichtlich Plastizität, Abdichtungswirkung und Wasserhaltigkeit einem Ton gleichwertig sein muß, mit einer darüberliegenden Kunststoffdichtungsbahn im Preßverbund. Die hiermit verbundenen witterungsbedingten Ausführungsschwierigkeiten und die Rißanfälligkeit mineralischer Abdichtungsschichten sind vorstehend beschrieben. Darüber hinaus sind Kombinationsdichtungen sehr teuer.

Es wurde nun gefunden, daß die vorgenannten witterungsbedingten Schwierigkeiten bei zu hohen Wassergehalten des einzubauenden Bodens überwunden und gleichzeitig die Rißanfälligkeit bindiger Böden verbessert wird, wenn man dem übernäßten bindigen Boden Trocken- Klär- oder - Gewässerschlamm zusetzt.

Gegenstand der Erfindung ist somit ein Verfahren zur Abdichtung von Bodenformationen, wobei eine mineralische Abdichtungsschicht aus bindigem Boden und einem Zuschlagsstoff auf die Bodenformation aufgebracht und dann mechanisch verdichtet wird das dadurch gekennzeichnet ist, daß man als Zuschlagsstoff Trocken-Klär- oder -Gewässerschlamm mit einem Trockensubstanzgehalt von mindestens 70 Gew.% (Schlamm TS ≥ 70) in einer Menge von 5 bis 50 Gew.%, bezogen auf Schlamm-Trockensubstanz und berechnet auf das Trockengewicht des Bodens verwendet.

Erfindungsgemäß geeignete mineralische bindige Böden sind gemischtkörnige und feinkörnige Böden nach DIN 18196. Hierzu gehören insbesondere schluffige, lehmige und tonige Böden mit mehr oder weniger großem Sandanteil. Geeignete Beispiele sind in der DIN 18196 sowie in Ullmanns Enzyklopädie technischen Chemie, 4. Auflage, Band 6 (1981) beschrieben.

Bei dem erfindungsgemäß eingesetzten Trockenschlamm handelt es sich um Klär- oder Gewässerschlamm mit einem Trockensubstanzgehalt von 70 Gew.% oder darüber (Schlamm TS ≥ 70). Schlämme mit breiiger bis pastöser Konsistenz besitzen üblicherweise einen Trockensubstanzgehalt von 15 bis 20 Gew.%, der bei knetbaren bis halbfesten Schlämmen, wie sie z.B. durch Siebtrocknung erhalten werden, auf 25 bis 35 % ansteigt. Mit der mechanischen Entwässerung können die Wassergehalte im Schlamm bestenfalls auf ca. 50 % gebracht werden. Für eine weitergehende Entwässerung kommt - da eine natürliche Trocknung zu zeitaufwendig ist -nur die thermische Trocknung in Frage, wobei Rauchgastrockner, z.B. in Form von Trommeltrocknern, Etagentrocknern, Schwebetrocknern, Stromtrocknern oder Wirbelschichttrocknern verwendet werden können. Die erhaltenen Trockenschlämme liegen dann in grobkörniger, krümmeliger Form vor.Die thermische Trocknung erfordert jedoch einen außerordentlich großen Energieaufwand, der bei 1000 kWh für die Abtrennung von 1 m³ Schlammwasser liegt. Demgemäß ist die thermische Trocknung wirtschaftlich nur dann gerechtfertigt, wenn dem großen Energieaufwand eine entsprechende Einsparung von Deponiekosten bzw. Wärmerückgewinnung gegenüber steht. Infolge der hohen Deponiekosten erhält man z.B. bei der Abnahme von Klärschlamm TS 30 eine Rückvergütung von 100 bis 120 DM/m³, und bei der Abnahme von Klärschlamm TS 90 eine Rückvergütung von 400 DM/m³. Die Erfindung ermöglicht somit nicht nur die Einsparung von kostbarem Deponieraum, sondern die Verwendung von Trockenschlamm TS ≥ 70 ist auch mit erheblichen finanziellen Vorteilen verbunden. Schließlich kann durch die erfindungsgemäße Verwendung von Trockenschlamm TS ≥ 70 auch dessen Verbrennung vermieden werden, was unter dem umweltbedingten Verbot einer Verminderung der CO2 Belastung ein nicht zu unterschätzender Vorteil ist.

Es wurde gefunden, daß mit dem Verfahren der Erfindung mineralische Abdichtungsschichten mit erheblich verringerten Schrumpfwerten und damit erheblich herabgesetzter Rißneigung hergestellt werden können. Dieser Effekt ist nur bei der Verwendung von Trockenschlamm und nicht bei der Verwendung von breiigen oder knetbaren Schlämmen mit einer Trockensubstanz von max. 50% zu beobachten, abgesehen davon, daß mit derartigen höher-wasserhaltigen Schlämmen eine Rücktrocknung von übernäßten Böden nicht möglich ist.

Erfindungsgemäß wird der Trockenschlamm in einer Menge von 5 bis 50 Gew.-%, bezogen auf Schlamm-Trockensubstanz und berechnet auf das Trockengewicht des Bodens verwendet. Vorzugsweise beträgt die verwendete Trockenschlamm-Menge 10 bis 30 Gew. % und besonders bevorzugt 15 bis 25 Gew.-%.

Vorzugsweise wird der Trockenschlamm in gemahlener Form verwendet, wobei vorzugsweise darauf geachtet wird, daß die Korngröße unter 0,6 mm liegt. Vorzugsweise wird hierbei die Mahlung so durchgeführt, daß mindestens 60 Gew.-% des Trockenschlammes eine Korngröße unterhalb von 0,2 mm besitzen.

Erfindungsgemäß beträgt der Trockensubstanzgehalt des Trockenschlammes mindestens 70 Gew.-%, d.h. der Maximalwassergehalt liegt bei 30 Gew.-%. Bezüglich des Trockensubstanzgehaltes besteht nach oben an sich keine besondere Grenze. Da die Entfernung der letzten Wasserreste jedoch zunehmend schwieriger wird, ist eine vollständige Wasserentfernung zu energieaufwendig und ist deshalb schon aus ökonomischen Gründen nicht erstrebenswert. Der Wassergehalt des Trockenschlammes hängt auch in gewissem Umfang vom Wassergehalt des bindigen Bodens ab. Offensichtlich ist der Rücktrocknungseffekt des Trockenschlammes um so größer, je größer dessen Trockensubstanzgehalt bzw. je kleiner dessen Wassergehalt ist. Bei sehr nassen Böden wird es deshalb zur Vermeidung großer Mengen an zugesetztem Trockenschlamm vorteilhaft sein, einen Trockenschlamm mit hohem Trockensubstanzgehalt, z.B. Schlamm TS ≥ 80 oder Schlamm ≥ 90 einzusetzen.

Als Quellen für den Trockenschlamm kommen die üblichen Klär- und Gewässer-Schlämme in Frage. Zwar ist Klärschlamm, insbesondere wenn er nicht voll ausgefault ist, bakteriologisch nicht beständig, und man sollte bei der Zersetzung des organischen Materials an sich eine stärkere Schrumpfung und damit eine Beeinträchtigung der Deponieabdichtung befürchten. Überraschenderweise hat sich jedoch gezeigt, daß eine erhöhte Schrumpfung nicht auftritt. Im Gegenteil, es wird sogar eine Herabsetzung der Schrumpfung des bindigen Bodens durch den Zusatz an Trockenschlamm beobachtet. Diese günstige Beinflussung des für die Abdichtungswirkung so wichtigen Schrumpfverhaltens ist bei Zusatz von Naßschlämmen nicht zu beobachten, wie durch die Vergleichsbeispiele belegt ist.

In einer bevorzugten Ausführungsform wird eine verbesserte Abdichtungswirkung dadurch erreicht, daß man dem Gemisch aus bindigem Boden und Trockenschlamm pulverförmiges Wasserglas in solcher Menge zusetzt, daß im Bodenwasser des Abdichtungsgemisches eine 3 bis 10 Gew.-prozentige Wasserglaslösung resultiert. Hierbei besteht eine weitere bevorzugte Arbeitsweise darin, daß man das pulverförmige Wasserglas zusammen mit dem Trockenschlamm in einem einzigen Arbeitsgang mit dem bindigen Boden vermischt.

Der Ausdruck "pulverförmig" bezeichnet hierbei eine feinteilige trockene Form, schließt also auch flockenförmig usw. mit ein. Beispiele für geeignetes Wasserglas sind Natron- und Kaliwassergläser, wobei Natronwassergläser wegen ihrer Wohlfeilheit bevorzugt sind. Ein besonders geeignetes Handelsprodukt ist unter der Bezeichnung Deposil N erhältlich.

Neben der Verbesserung der Abdichtungswirkung, insbesondere hinsichtlich der zeitlichen Beständigkeit, besteht ein weiterer Vorteil bei der Verwendung von pulverförmigem Wasserglas in dem hohen Rückhaltevermögen von Schadstoffen, z.B. von Schwermetallen, die insbesondere in Sickerwässern von Deponien anzutreffen sind.

Die Beispiele erläutern die Erfindung. Soweit nicht anders angegeben, beziehen sich alle Prozentangaben auf das Gewicht.

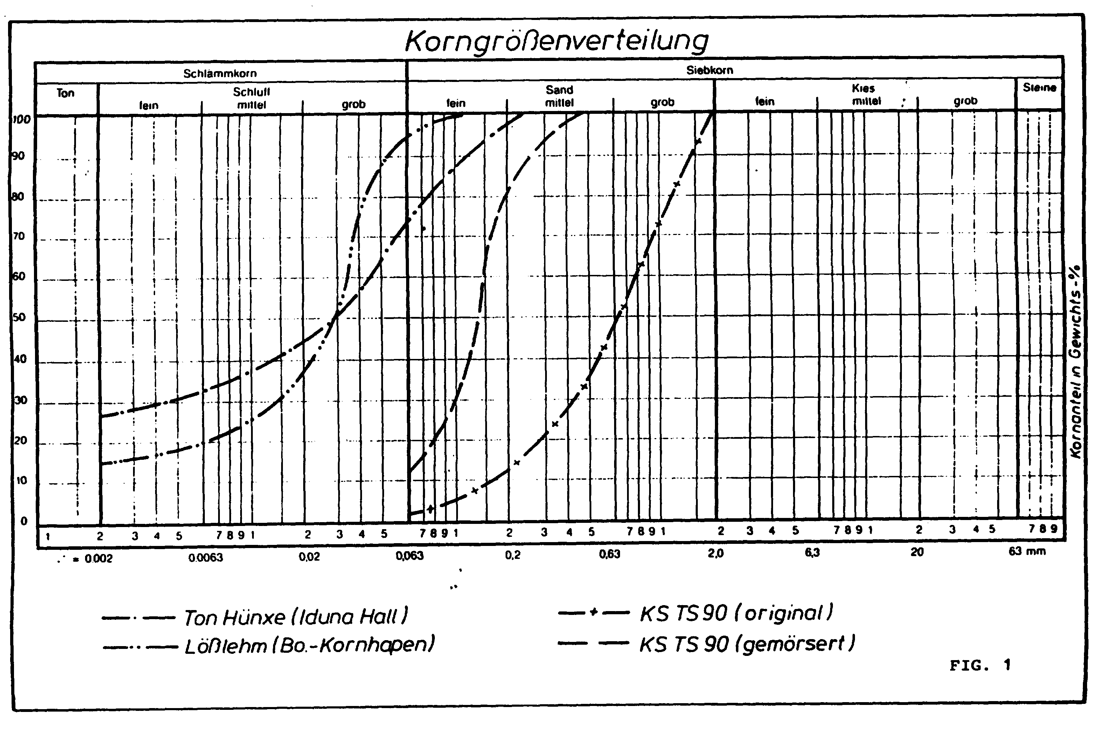

In den Beispielen kamen die nachfolgend aufgeführten Rohstoffe zur Verwendung.
1. Ton aus der Tongrube Hünxe (Iduna Hall) mit einer Korngrößenverteilung gemäß der Figur 1.
2. Lößlehm aus Bochum-Kornharpen mit einer Korngrößenverteilung gemäß der Figur 1.
3. Klärschlamm TS 90 (KS-TS 90), erhalten durch thermische Trocknung eines Kommunal-Klärschlammes (original) mit einer Korngrößenverteilung gemäß der Figur, und gemahlen (gemörsert) mit feinerer Korngrößenverteilung gemäß der Figur 1.
4. Klärschlamm TS 30 (KS-TS 30), erhalten durch mechanische Entwässerung eines Kommunal-Klärschlammes bis auf einen Trockensubstanzgehalt von 30 Gew.-%.

- Fig. 1: zeigt die Korngrößenverteilungen der verwendeten Rohstoffe, nämlich Ton, Lößlehm und Klärschlamm TS 90, ungemahlen und gemahlen.
- Fig. 2: zeigt die Proctorkurve des Lößlehms, d.h. die Abhängigkeit der Verdichtbarkeit des Lößlehms von dessen Wassergehalt.

Die Durchführung der Schrumpfversuche erfolgte nach DIN 18122 Teil 2/1987. Hierbei wird in eine Ringform mit einem Innendurchmesser von 70 mm und einer Höhe von 14 mm das feuchte Bodengemisch luftporenfrei eingestrichen. Anschließend wird der mit dem Boden ausgefüllte Ring zur Bestimmung des Anfangswassergehaltes (abgedeckt mit einer Glasplatte) gewogen. Nach anfänglicher Trocknung bei Raumtemperatur wird dann im Trocknungsofen bei 105°C bis zur Massenkonstanz getrocknet. Das entwichene Wasser ergibt sich aus den Wägedifferenzen. Die Schrumpfung wird durch Ausmessen des trockenen Probekörpers bestimmt.

Zum Nachweis des günstigen Einflusses von Trockenschlamm - im Vergleich zu Naßschlamm - auf das Schrumpfverhalten bindiger Böden wurden zwei parallele Versuchsreihen, zum einen mit einem feinsandigen Lößlehm mit einer Korngrößenverteilung gemäß der Figur (Herkunft Bochum-Kornharpen), und zum anderen mit Ton aus einer Tongrube in Hünxe mit einer Korngrößenverteilung gemäß der Figur, und zwar jeweils mit Schlamm TS 90 und Schlamm TS 30 durchgeführt. Hierbei mußte einerseits auf gleichen Ausgangswassergehalt der zu vergleichenden Proben geachtet werden, da mit steigendem Wassergehalt auch die Schrumpfwerte des Bodengemisches ansteigen. Andererseits sollte zur Herbeiführung vergleichbarer Bedingungen auch der Schlammgehalt (bezogen auf Trockensubstanz) in den zu vergleichenden Bodengemischen gleich sein. Diese Bedingungen wurden so hergestellt, daß bei Verwendung von Schlamm TS 30 nach dessen Zugabe zur Erzielung gleicher Verhältnisse von Schlammtrockensubstanz (100 % trocken) zu Bodentrockensubstanz (100 % trocken) der stark erhöhte Wassergehalt des zunächst erhaltenen Gemisches durch Rücktrocknung im Umluftofen bei 60°C auf den Wassergehalt der mit Schlamm TS 90 erhaltenen Vergleichsprobe gebracht wurde.

Die Ergebnisse sind in den Tabellen I und II zusammengestellt, wobei auf folgendes hinzuweisen ist.

In der Bodenmechanik wird der Wassergehalt nicht auf die Gesamtmenge des feuchten Bodengemisches bezogen sondern auf Bodentrockensubstanz. 1500 g eines feuchten Bodens mit einem Wassergehalt von 25 % enthalten somit 300 g Wasser und 1200 g Bodentrockensubstanz. Dieser bodenmechanisch ausgedrückte Wassergehalt von 25 Gew.-% entspricht jedoch bei üblicher Rechnung (Wassergehalt bezogen auf Gesamtmenge) nur einem Wassergehalt von 20 Gew.-%. Da die bodenmechanische Rechnung bei den in den Tabellen aufgeführten Daten leicht zu Verwirrungen führt, wurde der Wassergehalt stets auf Gesamtmenge berechnet. Der bodenmechanisch berechnete Wassergehalt ist jedoch jeweils in Klammern angegeben.

**Tabelle I.**

| Lößlehm | | | |
|---|---|---|---|
| Gesamtmenge, g | 1500 | 1500 | 1500 |
| Trockensubstanz | 1200 | 1200 | 1250 |
| Wasser, g | 300 | 300 | 250 |
| Wassergehalt, Gew.-% | 20.0 (25.0) | 20.0 (25.0) | 16.7 (20.0) |
| Zustandsform | breiig, nicht verdichtbar | breiig, nicht verdichtbar | gut verdichtbar |
| k-Wert m·s⁻¹ | | | 8·10⁻¹⁰ |
| Schrumpfung, Vol.-% | 8.9 11.2 | 8.9 11.2 | 6.2 7.1 |
| Mittelwert, Vol.-% | 10.1 | 10.1 | 6.7 |
| Klärschlamm TS 90 | + 20% KS-TS 90 | + 20% KS-TS 30 | |
| Schlamm, g | 267 | 800 | |
| Schlammtrockensubstanz, g | 240 | 240 | |
| Wasser, g | 27 | 560 | |
| Gesamt-Trockensubstanz, g | 1440 | 1440 | |
| Geamt-Wasser, g | 327 | 860 | |
| Wassergehalt, Gew.-% | 18.5 (22.7) | 37.4 (59.7) | |
| Zustandsform | gut verdichtbar | breiig, nicht verdichtbar, Rücktrocknung auf Gesamtmenge 1763 g | |
| Wassergehalt, % | 18.5 (22.7) | 18.3 (22.5) | |
| Zustandsform | sehr gut verdichtbar | gut verdichtbar | |
| k-Wert, m·s⁻¹ | 8·10⁻¹⁰ | 10·10⁻¹⁰ | |
| Schrumpfung, | 2.7 gemahlen | 8.9 | |
| Vol.-% | 3.5 ungemahlen | 11.2 | |
| Mittelwert | 2.9 | 10.1 | |

**Tabelle II.**

| Ton | | | |
|---|---|---|---|
| GESAMTMENGE, G | 1500 | 1500 | 1500 |
| Trockensubstanz | 1111 | 1111 | 1188 |
| Wasser, g | 389 | 389 | 312 |
| Wassergehalt, Gew.-% | 25.9 (35.0) | 25.9 (35.0) | 20.8 (26.3) |
| Zustandsform | breiig, nicht verdichtbar | breiig, nicht verdichtbar | verdichtbar, weich |
| k-Wert, m·s⁻¹ | | | 8·10⁻¹¹ |
| Schrumpfung, Vol.-% | 23.6 26.1 | 23.6 26.1 | 20.8 22.8 |
| Mittelwert, Vol.-% | 24.9 | 24.9 | 21.8 |
| Klärschlamm TS 90 | + 20% KS-TS 90 | + 20% KS-TS 30 | |
| Schlamm, g | 247 | 740 | |
| Schlammtrockensubstanz | 222 | 222 | |
| Wasser, g | 25 | 518 | |
| Gesamt-Trockensubstanz, g | 1333 | 1333 | |
| Geamt-Wasser, g | 414 | 907 | |
| Wassergehalt, Gew.-% | 23.7 (31.1) | 40.5 (68.0) | |
| Zustandsform | gut verdichtbar | breiig, nicht verdichtbar, Rücktrocknung auf Ge-samtmenge 1746 g | |
| Wassergehalt, % | 23.7 (31.1) | 23.7 (31.1) | |
| Zustandsform | sehr gut verdichtbar | gut verdichtbar | |
| k-Wert, m·s⁻¹ | 8·10⁻¹¹ | 3·10⁻¹⁰ | |
| Schrumpfung, Vol.-% | 9.6 gemahlen | 19.5 | |
| | 12.0 ungemahlen | 21.3 | |
| Mittelwert | 10.8 | 20.4 | |

Den Tabellen I und II läßt sich zunächst entnehmen, daß die Schrumpfung eines Bodens mit steigendem Wassergehalt zunimmt, wobei die Schrumpfung bei Ton insgesamt sehr viel stärker ausgeprägt ist als bei Lößlehm. So besitzt zum Beispiel Lößlehm (vgl. Tabelle I, Zeilen 4 und 7/8) bei einem Wassergehalt von 16.7 % eine Schrumpfung von 6.7 Vol.-%, die bei einem Wassergehalt von 20.0 % auf 10.1 Vol.-% ansteigt. Demgegenüber (vgl. Tabelle II, Zeilen 4 und 7/8) beträgt bei Ton bei einem Wassergehalt von 20.8 % die Schrumpfung 21.8 Vol.-%, und bei einem Wassergehalt von 25.9 % 24.9 Vol.-%.

Der Lößlehm in Tabelle I besaß einen Wassergehalt von 20.0 % und war somit wasserübersättigt. Bei diesem Wassergehalt von 20.0 % besitzt der Lößlehm eine breiige Zustandsform und ist nicht verdichtbar. Der Einbau-Wassergehalt des Lößlehmes bei 95 % Proctordichte (im nassen Bereich der Proctorkurve) liegt bei 17.5 % (bodenmechanisch: 21.2 %).

Mit dem wasserübersättigten Lößlehm wurden durch Zugabe von 10 Gew.-% Trockenschlamm (KS-TS 90), berechnet auf Schlammtrockensubstanz und bezogen auf Bodentrockensubstanz, mechanisch verdichtungsfähige, plastisch verformbare Körper erhalten. Bei Zugabe von 15 Gew.-% Trockenschlamm konnte eine gute Maschinenverdichtung hergestellt werden. Der Erdkörper entsprach hinsichtlich der Verdichtungsfähigkeit einem natürlichen Lößlehm mit optimalem Wassergehalt (unter dem Gesichtspunkt der Verdichtungsfähigkeit) von etwa 14 %. Bei einem Gehalt an Trockenschlamm von 20 Gew.-% ergab sich ein sehr trockener Erdkörper, der sehr gut verdichtungsfähig war und selbst bei intensivster mechanischer Verdichtung kein Wasser abgab (entsprechend etwa 95 % Proctordichte im **trockenen** Ast der Proctorkurve).

Der Ton der Tabelle II ist mit einem Wassergehalt von 25.9 % infolge seiner breiigen Konsistenz ebenfalls nicht verdichtungsfähig. Hier wurde mit einer Zugabemenge von 10 Gew.-% KS-TS 90 bereits eine mechanische Verdichtungsfähigkeit erreicht. Der Boden war jedoch noch stark plastisch verformbar. Bei einer Zugabemenge von 15 Gew.-% konnte das Bodenmaterial gut verdichtet werden. Die Zugabe von 20 Gew.-% Zuschlagsstoff erhöhte die Verdichtungsfähigkeit sehr stark. Selbst bei intensivster mechanischer Verdichtung gab der Boden kein Wasser mehr ab (entsprechend etwa 95 % Proctordichte im **trockenen** Ast der Proctorkurve).

Die Tabellen I und II zeigen die ausgeprägte Verbesserung im Schrumpfverhalten bindiger Böden bei Zugabe von Trockenschlamm TS 90. Der natürliche Lößlehm besitzt bei einem Wassergehalt von 16.7 % eine Schrumpfung von 6.7 Vol.-% und bei einem Wassergehalt von 20.0 % eine Schrumpfung von 10.1 Vol.-% (Tabelle I, Spalte 4, Zeilen 4 und 8). Nach Zugabe von 20 % KS-TS 90 beträgt die Schrumpfung des erhaltenen Bodengemisches bei einem Wassergehalt von 18.5 % nur noch 2.9 Vol.-% (Tabelle I, Spalte 2, Zeilen 1 und 5 von unten) d.h. die Schrumpfung wurde auf weniger als die Hälfte verringert. Dagegen läßt sich bei Zugabe der gleichen Menge (berechnet auf Trockensubstanz) KS-TS 30 keinerlei Verbesserung des Schrumpfverhaltens erreichen; das entsprechende Bodengemisch besitzt bei einem Wassergehalt von 18.3 % eine Schrumpfung von 10.1 Vol.-% (Tabelle I, Spalte 3, Zeilen 1 und 5 von unten).

Eine ähnlich ausgeprägte Verbesserung des Schrumpfverhaltens ist auch bei Ton zu beobachten. Ausweislich der Tabelle II besitzt natürlicher Ton bei einem Wassergehalt von 20.8 % eine Schrumpfung von 21.8 % (Spalte 4, Zeilen 4 und 7/8). Nach Zugabe von 20 % KS-TS 90 ist die Schrumpfung auf einen Wert von nur 10.8 % gesunken (Tabelle II, Spalte 2, letzte Zeile), und dies, obwohl der Wassergehalt des Bodengemisches mit 23.7 % deutlich höher ist als der Wassergehalt des reinen Tons (20.8 %). Mit einem Naßschlamm, KS-TS 30 ist diese Verbesserung im Schrumpfverhalten nicht zu erreichen (Schrumpfung 20.4 % gegenüber nur 10.8 % bei KS-TS 90), obwohl eine gewisse Verbesserung gegenüber dem Ausgangston zu beobachten ist.

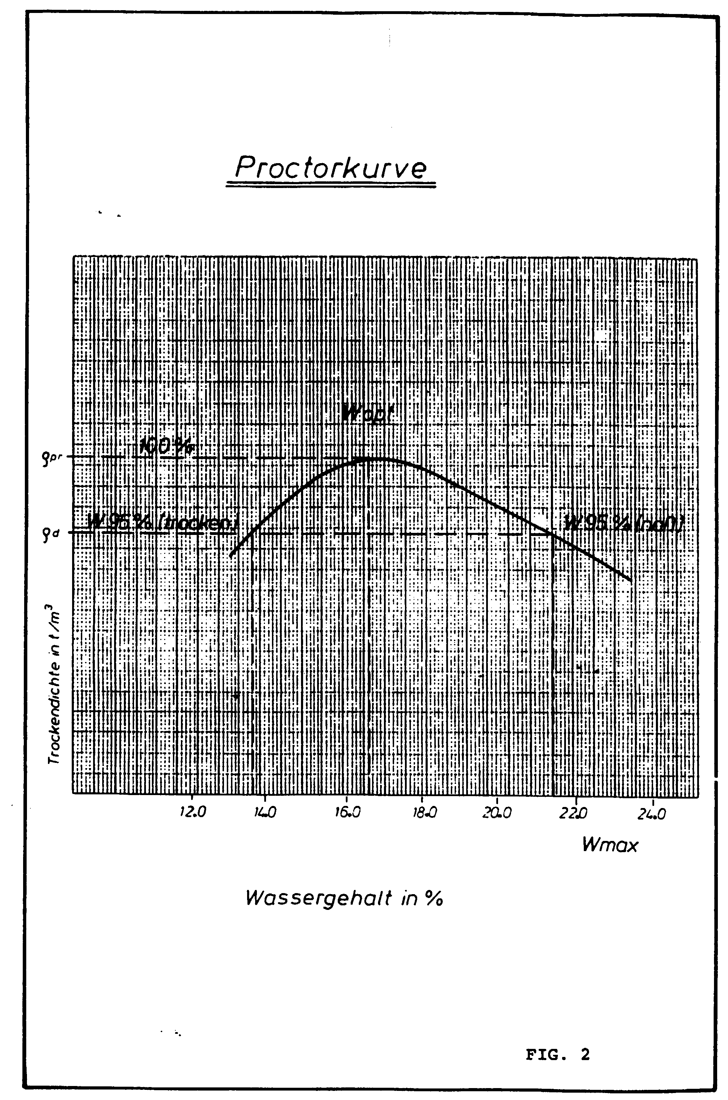

In den nachfolgenden Ausführungen bedeuten Wₒₚₜ den Wassergehalt im Scheitelpunkt der Proctorkurve, d.h. den Wassergehalt bei optimaler Verdichtbarkeit, W 95 % trocken den Wassergehalt bei 95 % Proctordichte im trockenen Ast der Proctorkurve und W 95 % naß den Wassergehalt bei 95 % Proctordichte im nassen Ast der Proctorkurve, vgl. Figur 2.

Für den Lößlehm der Tabelle I sind die bodenmechanischen Proctorwerte in der nachfolgenden Tabelle III angegeben.

**Tabelle III.**

| Lößlehm | | |
|---|---|---|
| Parameter | Wassergehalt (%) | Wassergehalt nach Bodenmechanik % |
| Wₒₚₜ | 14.2 | 16.6 |
| W 95 % trocken | 12.1 | 13.8 |
| W 95 % naß | 17.5 | 21.2 |

Wie aus Tabelle I hervorgeht, ist der Lößlehm bei einem Wassergehalt von 16.7 % (20.0 %) gut verdichtbar. Bei einem Wassergehalt von 20.0 % (25.0 %) ist er breiig und nicht verdichtbar. Bei einem Wassergehalt von 18.5 % (22.7 %) ist dieses Material bereits so stark aufgeweicht, daß es nicht mehr maschinentechnisch verarbeitet werden kann. Demgegenüber ist das mit KS-TS 90 versetzte Bodengemisch bei einem Wassergehalt von 18.5 % (22.7 %) sehr gut verdichtbar. Selbst bei intensivster mechanischer Verdichtung gibt dieses Bodengemisch kein Wasser mehr ab; seine Zusammensetzung entspricht etwa 95 % Verdichtbarkeit des **trockenen** Astes der Proctorkurve. Mit anderen Worten, im Gegensatz zu dem Ausgangs-Lößlehm, der mit einem Wassergehalt von 16.7 % (20.0 %) bereits im nassen Ast der Proctorkurve liegt (ein Wassergehalt von 17.5 % (21.2) entspricht 95 % Proctordichte naß) und bereits bei kurzer Regeneinwirkung infolge Wasseraufnahme den Punkt im nassen Ast der Proctorkurve erreicht, wo eine maschinentechnische Verarbeitung nicht mehr möglich ist (92 % Proctordichte naß), hat das mit Trockenschlamm KS-TS 90 versetzte Bodengemisch von Spalte 2 der Tabelle I soviel "Wasserreserve", daß bei Regeneinwirkung zunächst sogar noch eine Zunahme der Verdichtbarkeit bis zum Scheitelpunkt der Proctorkurve erfolgt. Dieses Material kann dann noch weiteres Wasser (im nassen Ast der Proctorkurve) aufnehmen, unter Beibehaltung der sehr guten Verdichtbarkeit bis zu einem Wassergehalt, der W 95 % naß entspricht. Durch die Zugabe von Trockenschlamm zum Boden wird also dessen Wassertoleranz erhöht, die Proctorkurve wird insgesamt nach rechts zu höheren Wassergehalten hin verschoben. Hierin liegt ein weiterer entscheidender Vorteil des Verfahrens der Erfindung. Bisher blieben bei Verwendung eines Lößlehms gemäß letzter Spalte der Tabelle I ab einer gewissen Niederschlagseinwirkung nur folgende Möglichkeiten. Entweder die Baustelle mußte mit Schutzzelten vor weiteren Niederschlägen geschützt werden, oder die Arbeiten mußten so lange eingestellt werden, bis der Lößlehm wieder maschinentechnisch verarbeitbar geworden war. Man konnte auch einen Bodenaustausch vornehmen oder schießlich den übernäßten Boden in einem Umluftofen bis auf einen annehmbaren Wassergehalt zurücktrocknen. Es leuchtet ohne weiteres ein, daß alle diese Maßnahmen mit immensen Kosten verbunden sind, die entweder direkt durch Material- und Energieeinsatz anfallen oder indirekt mit dem Zeitverlust (Stillegung der Baustelle auf unbestimmte Zeit) verbunden sind.

Ähnlich wie bei Lößlehm sind auch die Verhältnisse bei Ton (vgl. Tabelle II). Die bodenmechanischen Proctorwerte sind in Tabelle IV angegeben.

**Tabelle IV.**

| Ton | | |
|---|---|---|
| Parameter | Wassergehalt (%) | Wassergehalt nach Bodenmechanik % |
| Wₒₚₜ | 18.1 | 22.1 |
| W 95 % trocken | 15.9 | 18.9 |
| W 95 % naß | 21.3 | 27.1 |

Der Ausgangston der Tabelle II ist bei einem Wassergehalt von 25.9 % (35.0 %) breiig und nicht verdichtbar. Bei einem Wassergehalt von 20.8 % (26.3 %) ist der Ton zwar verdichtbar, jedoch schon weich. Aus dem Vergleich dieser Werte folgt bereits, daß der Ton bei einem Wassergehalt von 23.7 % (31.1 %) sehr stark aufgeweicht ist und sich an der Grenze zu breiig befindet. Eine maschinentechnische Verarbeitbarkeit ist deshalb in keinem Fall gegeben. Demgegenüber ist das mit Trockenschlamm KS-TS 90 versetzte Bodengemisch bei diesem Wassergehalt von 23.7 % (31.1 %) sehr gut verdichtbar. Selbst bei intensivster mechanischer Verdichtung gibt dieses Bodengemisch kein Wasser mehr ab. Es entspricht etwa 95 % Proctordichte im **trockenen** Ast der Proctorkurve und besitzt damit vergleichbare "Wasserreserven" wie das Lößlehm-KS-TS90-Bodengemisch von Tabelle I.

Bezüglich der Abdichtungseigenschaft der mit Trockenschlamm versetzten Böden zeigen die in den Tabellen I und II aufgeführten k-Werte, daß durch den Zusatz des Trockenschlammes keine Verschlechterung der Abdichtungswirkung des Boden verursacht wird. Hierzu wurden noch folgende Versuche durchgeführt.

Die Abdichtungswerte werden bestimmt nach DIN 18127. Hierbei wird ein gegebener Boden in einen Zylinder (Proctortopf) eingefüllt und mit einer genormten Energie eingestampft. Je nach Wassergehalt des Bodens erhält man dann eine bestimmte Verdichtung des Bodens. Aus den ermittelten Dichten des Boden und aus den den unterschiedlichen Wassergehalten zugeordneten Dichtewerten erhält man die sogenannte Proctorkurve mit einem Dichtemaximum für einen bestimmten Wassergehalt und beidseitig dieses Maximums abfallenden Dichtewerten für geringere Wassergehalte (trockener Bereich) bzw. höhere Wassergehalte (nasser Bereich). Zur Erzielung besserer Abdichtungswerte wird hierbei vorzugsweise im nassen Bereich der Proctorkurve gearbeitet.

Fig. 2 zeigt die Proctorkurve für den Lößlehm der Tabelle I (vgl. auch Fig. 1), d.h. die Abhängigkeit der Verdichtbarkeit des Lößlehms vom Wassergehalt (alle Wassergehalte sind bodenmechanisch angegeben). Die größte Verdichtbarkeit (100 %) ist bei einem Wassergehalt (Wₒₚₜ) von 16.6 % gegeben. Hier liegt der Scheitelpunkt der Kurve. Nach links, d.h. zu geringeren Wassergehalten hin, erstreckt sich der trockene Ast der Proctorkurve, und nach rechts, d.h. zur höheren Wassergehalten hin, der nasse Ast der Proctorkurve. Eine gute Verdichtung des Bodens ist bis zu einer Proctordichte von 95 % gegeben, d.h., der Lößlehm ist bei Wassergehalten von 13.8 bis 21.2 % maschinentechnisch gut verarbeitbar. Ab einer Proctordichte von 92 % ist eine maschinentechnisch Verarbeitbarkeit nicht mehr gegeben.

Unter dem Gesichtspunkt der Einbaueigenschaften und der erzielbaren Abdichtungseigenschaften wird bevorzugt im nassen Bereich der Proctorkurve gearbeitet. Man sieht jedoch, daß ein im trockenen Ast der Proctorkurve liegendes Bodengemisch eine größere Flexibilität bezüglich der Wasseraufnahme besitzt. Während nämlich der Lößlehm mit 21.2 % Wassergehalt, entsprechend 95 % Proctordichte im nassen Ast der Proctorkurve maschinentechnisch gut verdichtbar ist, nimmt diese Verdichtbarkeit bereits bei relativ geringer Wasseraufnahme soweit ab, daß der Wert von 92 % Proctordichte unterschritten und damit keine maschinentechnisch Verarbeitbarkeit mehr gegeben ist. Demgegenüber besitzt der Lößlehm mit 13.8 % Wassergehalt, entsprechend 95 % Proctordichte im trockenen Ast der Proctorkurve, ein erhebliches Wasseraufnahmevermögen, wobei zunächst die Verdichtbarkeit (bis zu einem Wassergehalt von 16.6 %) sogar noch zunimmt und dann, bis zu einem Wassergehalt von 21.2 % immer noch sehr gut bleibt.

Der Lößlehm der Tabelle I (vgl auch Fig. 1) besitzt bei 95 % Proctordichte im nassen Ast der Proctorkurve einen Durchlässigkeitsbeiwert von k = 8·10⁻¹⁰ m·s⁻¹. Der entsprechende Wert für den Ton der Tabelle II (vgl. auch Fig. 1) beträgt 8·10⁻¹¹ m·s⁻¹. Die mit Lößlehm und Ton unter Zusatz von Trockenschlamm erzielten Durchlässigkeitsbeiwerte sind in Tabelle V zusammengestellt. Weiterhin sind in Tabelle V diejenigen Werte enthalten, die bei zusätzlicher Verwendung von pulverförmigem Wasserglas erhalten wurden. Das Wasserglas wurde hierbei in solcher Menge verwendet, daß im Bodenwasser eine 5-prozentige Wasserglaslösung entstand.

**Tabelle V**

| Zugabe KS-TS 90 % | k-Wert Lößlehm m·s⁻¹ | k-Wert Lößlehm + 5% Wasserglas m·s⁻¹ | k-Wert Ton m·s⁻¹ |
|---|---|---|---|
| ungemahlen | | | |
| 0 | 8.0·10⁻¹⁰ | | 8.0·10⁻¹¹ |
| 10 | 7.5·10⁻¹⁰ | 9.5·10⁻¹¹ | 8.4·10⁻¹¹ |
| 15 | 6.0·10⁻¹⁰ | 7.3·10⁻¹¹ | 7.2·10⁻¹¹ |
| 20 | 8.0·10⁻¹⁰ | 8.2·10⁻¹¹ | 8.7·10⁻¹¹ |

| gemahlen | | | |
|---|---|---|---|
| 0 | 8.0·10⁻¹⁰ | | |
| 10 | 4.0·10⁻¹⁰ | 8.6·10⁻¹¹ | 6.1·10⁻¹¹ |
| 15 | 2.5·10⁻¹⁰ | 4.7·10⁻¹¹ | 5.4·10⁻¹¹ |
| 20 | 3.5·10⁻¹⁰ | 6.8·10⁻¹¹ | 5.9·10⁻¹¹ |

| Zugabe KS-TS 70 % | | | |
|---|---|---|---|
| ungemahlen | | | |
| 17.5 | 6.2·10⁻¹⁰ | 7.5·10⁻¹¹ | 7.7·10⁻¹¹ |

| gemahlen | | | |
|---|---|---|---|
| 17.5 | 2.4·10⁻¹⁰ | 5.2·10⁻¹¹ | 5.7·10⁻¹¹ |

Wie aus Tabelle V hervorgeht, bringt die Zugabe von Trockenschlamm grundsätzlich keine Verschlechterung der Abdichtungseigenschaften mit sich. Bei gemahlenem Trockenschlamm wird eher noch eine Verbesserung der k-Werte von nahezu einer halben Zehnerpotenz erreicht. Hierbei können die Abdichtungswerte durch zusätzliche Verwendung von Wasserglas nochmals um mindestens eine Zehnerpotenz verbessert werden. Bei Ton besitzt bereits das Ausgangsmaterial einen sehr niedrigen k-Wert von 8·10⁻¹¹ m·s⁻¹. Dies übertrifft die gestellten Anforderungen der TA Abfall und TA Siedlungsabfall von 1·10⁻¹⁰ m·s⁻¹ erheblich, so daß bei Ton keine weitere Verbesserung durch Zugabe von Wasserglas erforderlich ist. Letzteres wäre dann angezeigt, wenn noch niedrigere Werte als 8·10⁻¹⁰ m·s⁻¹ zur Porenraumversiegelung und somit zur Schadstoffrückhaltung in tonhaltigen Böden für sehr lange Zeit den Qualitätsmaßstab bilden sollten. Hierdurch wäre dann eine gleichwertige, jedoch wesentlich kostengünstigere Alternative zur sogenannten Kombinationsdichtung an der Deponiebasis gegeben.

Aus der Tabelle V ergibt sich in Verbindung mit den Tabellen I und II noch folgendes. Durch den Zusatz von Trockenschlamm zu bindigen Böden tritt zwar zunächst keine Verbesserung der k-Werte auf. Es wurde jedoch gefunden, daß mit Trockenschlamm versetzte Böden eine größere Flexibilität bezüglich des Wassergehaltes aufweisen, in dem sich ausgezeichnete Abdichtungswerte erzielen lassen. Während nämlich bei natürlichen Böden, z.B. Lößlehm oder Ton, der k-Wert bei 95 % Proctordichte im trockenen Ast der Proctorkurve regelmäßig um etwa eine halbe Zehnerpotenz niedriger als bei 95 % Proctordichte im nassen Bereich der Proctorkurve liegt, ist dies bei den mit Trockenschlamm versetzten Böden nicht zu beobachten. Die k-Werte sind im trockenen Ast genauso gut wie im nassen Ast der Proctorkurve. Dies stellt einen weiteren erheblichen Vorteil für die Baustellenpraxis dar.

Zur Überprüfung einer umweltverträglichen Einkapselung von in belasteten Böden enthaltenen organischen und anorganischen Schadstoffen wurde ein künstliches Bodengemisch wie folgt hergestellt.

30 Gewichtsteile Lößlehm, Wassergehalt 16.7 (20 %), mit einem Zusatz an pulverförmigem Wasserglas (Deposil N) in solcher Menge, daß eine 5-prozentige Wasserglaslösung entsteht, 20 Gewichtsteile Klärschlamm TS 90, 50 Gewichtsteile Bleicherde mit einem mittel- bis hochviskosen Mineralölanteil von 15 %, 50 mg/kg PCB, 68 mg/kg Chrom VI, 180 mg/kg Kupfer und 1250 mg/kg Zink.

Das Gemisch wurde dann mit Wasser zur Erzielung einer optimalen Verdichtungsfähigkeit versetzt. Nach der Verdichtung wurde die verdichteten Körper eine Woche stehengelassen. Anschließend wurde das Eluatverhalten an Zylinderproben mit einem Durchmesser von 10 cm und einer Höhe von 10 cm mit Regenwasser von pH4 und destilliertem Wasser von pH7 bestimmt. Während einer Eluatzeit von 3 Wochen wurde die in Tabelle VI angegebenen Werte erhalten, wobei zwischen Regenwasser und destilliertem Wasser keine Unterschiede festgestellt werden konnten.

**Tabelle VI**

| Elution von schadstoffbelastetem Boden | | | | | |
|---|---|---|---|---|---|
| Elutionstag | Mineralöl (mg/l) | PCB (µg/l) | Kupfer (mg/l) | Chrom VI (mg/l) | Zink (mg/l) |
| | | | | | |
| 1 | 0,3 | <0,01 | 0,04 | 0,02 | 0,02 |
| 2 | 0,1 | <0,01 | 0,03 | 0,02 | <0,01 |
| 3 | 0,1 | <0,01 | <0,01 | <0,01 | <0,01 |
| 4 | 0,2 | <0,01 | <0,01 | <0,01 | <0,01 |
| 8 | 0,1 | <0,01 | <0,01 | <0,01 | <0,01 |
| 9 | <0,1 | <0,01 | <0,01 | <0,01 | <0,01 |
| 10 | 0,1 | <0,01 | <0,01 | <0,01 | <0,01 |
| 11 | 0,1 | <0,01 | <0,01 | <0,01 | <0,01 |
| 15 | 0,1 | <0,01 | <0,01 | <0,01 | <0,01 |
| 16 | 0,1 | <0,01 | <0,01 | <0,01 | <0,01 |
| 17 | 0,2 | <0,01 | <0,01 | <0,01 | <0,01 |
| 18 | 0,1 | <0,01 | <0,01 | <0,01 | <0,01 |
| 22 | 0,1 | <0,01 | <0,01 | <0,01 | <0,01 |
| 23 | 0,1 | <0,01 | <0,01 | <0,01 | <0,01 |

Tabelle VI zeigt die hervorragende Einkapselung von organischen und anorganischen Schadstoffen. Das Elutionsverhalten entspricht der Deponieklasse 1 (nicht verunreinigtes Wasser).

## Patentansprüche

1. Verfahren zur Abdichtung von Bodenformationen, wobei eine mineralische Abdichtungsschicht aus bindigem Boden und einem Zuschlagsstoff auf die Bodenformation aufgebracht und dann mechanisch verdichtet wird, dadurch **gekennzeichnet**, daß man als Zuschlagsstoff Trocken- Klär- oder -Gewässerschlamm mit einem Trockensubstanzgehalt von mindestens 70 Gew.% (Schlamm TS ≥ 70) in einer Menge von 5 bis 50 Gew.%, bezogen auf Schlamm-Trockensubstanz und berechnet auf das Trockengewicht des Bodens verwendet.

2. Verfahren nach Anspruch 1, dadurch gekennzeichnet, daß man den Trockenschlamm in einer Menge von 10 bis 30 Gew.% verwendet.

3. Verfahren nach Anspruch 2, dadurch gekennzeichnet, daß man den Trockenschlamm in einer Menge von 15 bis 25 Gew.% verwendet.

4. Verfahren nach einem der vorhergehenden Ansprüche, dadurch gekennzeichnet, daß man den Trockenschlamm in gemahlener Form, mit einer Korngröße unter 0,6 mm verwendet.

5. Verfahren nach einem der vorhergehenden Ansprüche, dadurch gekennzeichnet, daß man Trockenschlamm mit einem Trockensubstanzgehalt von 80 Gew.% oder höher (Schlamm TS ≥ 80) verwendet.

6. Verfahren nach Anspruch 6, dadurch gekennzeichnet, daß man Trockenschlamm mit einem Trockensubstanzgehalt von 90 Gew.% oder höher (Schlamm TS ≥ 90) verwendet.

7. Verfahren nach einem der vorhergehenden Ansprüche, dadurch gekennzeichnet, daß man einen übernäßten Boden verwendet und den Trockenschlamm in solcher Menge zusetzt, daß das erhaltene Bodengemisch maschinentechnisch gut verdichtbar ist.

8. Verfahren nach einem der vorhergehenden Ansprüche, dadurch gekennzeichnet, daß man dem Abdichtungsgemisch pulverförmiges Wasserglas in solcher Menge zusetzt, daß im Bodenwasser des Abdichtungsgemisches eine 3 bis 10 Gew.% Wasserglaslösung resultiert.

9. Verfahren nach einem der vorhergehenden Ansprüche, dadurch gekennzeichnet, daß man Trockenschlamm und Wasserglas in einem Arbeitsgang mit dem bindigen Boden vermischt.

10. Verwendung von Trocken-Klär- oder Gewässerschlamm mit einem Trockensubstanzgehalt von mindestens 70 Gew.-% (Schlamm TS ≥ 70) zur Verbesserung der Einbaueigenschaften bindiger Böden.

11. Ausführungsform nach Anspruch 10, dadurch gekennzeichnet, daß es sich bei den Einbaueigenschaften um eine oder mehrere Eigenschaften aus der Gruppe Schrumpfverhalten, Wasseraufnahmevermögen, Verdichtbarkeit und Schadstoffelutionsverhalten handelt.

## Claims

1. A process for the sealing of soil formations, a mineral sealing layer comprising cohesive soil and aggregate being applied to the soil formation and then being compacted mechanically, wherein the aggregate used is dry, sewage or water sludge having a dry substance content of at least 70% by weight (sludge DS ≥ 70) in an amount of 5 to 50% by weight based on sludge dry substance and calculated on the dry weight of the soil.

2. The process of claim 1, wherein the dry sludge is used in an amount of 10 to 30% by weight.

3. The process of claim 2, wherein the dry sludge is used in an amount of 15 to 25% by weight.

4. The process of any of the preceding claims, wherein the dry sludge is used in ground form with a grain size of below 0.6 mm.

5. The process of any of the preceding claims, wherein dry sludge having a dry substance content of 80% by weight or higher (sludge DS ≥ 80) is used.

6. The process of claim 5, wherein dry sludge with a dry substance content of 90% by weight or higher (sludge DS ≥ 90) is used.

7. The process of any of the preceding claims, wherein an overwetted soil is used, and the dry sludge is added in an amount such that the soil mixture obtained is easily compactible mechanically.

8. The process of any of the preceding claims, wherein pulverulent water glass is added to the sealing mixture in an amount such as to result in a 3 to 10% by weight water glass solution in the soil water of the sealing mixture.

9. The process of any of the preceding claims, wherein dry sludge and water glass are mixed with the cohesive soil in one operation.

10. The use of dry, sewage or water sludge having a dry substance content of at least 70% by weight (sludge DS ≥ 70) for the improvement of the installation properties of cohesive soils.

11. The embodiment of claim 10, wherein the installation properties are one or more properties selected from the group consisting of shrink properties, water absorption capability, compactibility and elution properties of harmful substances.

## Revendications

1. Procédé destiné à étancher des formations de sol, selon lequel une couche d'étanchéité minérale constituée de sol cohérent et d'un agrégat est déposée sur la formation de sol et ensuite compactée mécaniquement, caractérisé en ce que de la boue sèche, de la boue de curage ou de rivière avec une teneur en matière sèche d'au moins 70 % en poids (boue MS ≥ 70) est utilisée en tant qu'agrégat, et ce dans une proportion de 5 à 50 % en poids rapportée à la matière sèche de la boue et calculée par rapport au poids à l'état sec du sol.

2. Procédé selon la revendication 1, caractérisé en ce que la boue sèche est utilisée dans une proportion de 10 à 30 % en poids.

3. Procédé selon la revendication 2, caractérisé en ce que la boue sèche est utilisée dans une proportion de 15 à 25 % en poids.

4. Procédé selon l'une quelconque des revendications précédentes, caractérisé en ce que la boue sèche est utilisée à l'état broyé avec une granulométrie inférieure à 0,6 mm.

5. Procédé selon l'une quelconque des revendications précédentes, caractérisé en ce qu'on utilise de la boue sèche avec une teneur en matière sèche de 80 % en poids ou plus (boue MS ≥ 80).

6. Procédé selon la revendication 5, caractérisé en ce qu'on utilise de la boue sèche avec une teneur en matière sèche de 90 % en poids ou plus (boue MS ≥ 90).

7. Procédé selon l'une quelconque des revendications précédentes, caractérisé en ce qu'on utilise un sol détrempé, et que la boue sèche est ajoutée dans une proportion telle que le mélange de sol obtenu peut être bien compacté mécaniquement.

8. Procédé selon l'une quelconque des revendications précédentes, caractérisé en ce que du verre soluble à l'état pulvérulent est ajouté au mélange d'étanchéité, et ce dans une proportion telle qu'une solution de verre soluble de 3 à 10 % en poids est obtenue dans l'eau de constitution du mélange d'étanchéité.

9. Procédé selon l'une quelconque des revendications précédentes, caractérisé en ce que la boue sèche et le verre soluble sont mélangés au sol cohérent en une seule phase de travail.

10. Utilisation de boue sèche, de boue de curage ou de rivière avec une teneur en matière sèche d'au moins 70 % en poids (boue MS ≥ 70) afin d'améliorer les propriétés de mise en oeuvre de sols cohérents.

11. Mode de réalisation selon la revendication 10, caractérisé en ce que dans le cas des propriétés de mise en oeuvre, il s'agit d'une ou de plusieurs propriétés du groupe relatif au comportement de retrait, au pouvoir d'absorption d'eau, à l'aptitude au compactage et au comportement d'élution de matières nocives.
